# FASCICULE DE BREVET EUROPEEN

(11) **EP 1 152 634 B1**
(45) Date de publication et mention de la délivrance du brevet: **17.06.2009**
(21) Numéro de dépôt: 01109268.1
(22) Date de dépôt: 14.04.2001
(51) Int. Cl.: H04Q 3/00

(54) **Equipement d'interconnexion entre une installation d'usager RNIS et un réseau IP/ATM**
Verbindungsanlage zwischen einer ISDN Teilnehmereinrichtung und einem IP/ATM Netzwerk
Interconnecting equipment between an ISDN subscriber installation and an IP/ATM network

(30) Priorité: 02.05.2000 FR 0005680
(43) Date de publication de la demande: 07.11.2001
(73) Titulaire: Sagem Communications, 75015 Paris (FR)
(72) Inventeur: Campagnac, Isabelle, 92340 Bourg La Reine (FR); Bayle, Monique, 78114 Magny Les Hameaux (FR)
(74) Mandataire: Lapoux, Roland

(56) Documents cités:
- EP-A- 0 991 293
- WO-A-00/24210
- GB-A- 2 309 362
- SINGER J ET AL: "NARROWBAND SERVICES OVER ATM NETWORKS: EVALUATION OF TRUNKING METHODS" ISS. WORLD TELECOMMUNICATIONS CONGRESS. (INTERNATIONAL SWITCHING SYMPOSIUM),CA,TORONTO, PINNACLE GROUP, 21 septembre 1997 (1997-09-21), pages 17-25, XP000704451

## Description

La présente invention concerne l'interconnexion d'installations d'usager ayant des interfaces RNIS à un réseau à haut débit.

Actuellement, les installations d'usager RNIS (Réseau Numérique à Intégration de Services), particulièrement des installations privées avec autocommutateur desservi par un accès primaire 30 B + D, peuvent être utilisées à travers un réseau numérique par paquets de type X.25, ou à travers un réseau à débit plus élevé en mode ATM (Asynchronous Transfer Mode).

Par ailleurs le réseau Internet offre un transport de paquets IP notamment pour la voix selon le protocole de transport UDP (User Datagram Protocol) et donc peu fiable pouvant conduire à des pertes ou à un désordre dans le flot des paquets reçus. Le protocole de transport TCP (Transport Control Protocol) complète ce dernier pour le transport de la signalisation en assurant l'ordre des paquets émis à la réception et la retransmission des paquets perdus.

La demande de brevet EP 0 991 293 divulgue un équipement intermédiaire entre des réseaux à bande étroite, tels que des réseaux téléphoniques commutés publics ou des réseaux radios, et un réseau ATM. Aux usagers des réseaux téléphoniques sont alloués des canaux d'un circuit virtuel AAL2 du réseau ATM pour des appels vers un autre équipement. Soit les paquets de données et les paquets de signalisation des usagers sont transmis dans un unique circuit virtuel, soit les paquets de signalisation sont transportés dans un circuit virtuel distinct d'un autre circuit virtuel transportant les paquets de données.

Des messages de signalisation supplémentaires sont ajoutés dans un canal supplémentaire du circuit virtuel et contiennent des paramètres pour traiter les appels.

La demande de brevet EP 0 991 293 ne décrit pas de moyens fonctionnels dans l'équipement intermédiaire pour effectuer les opérations ci-dessus. En outre aucune négociation des paramètres n'est prévue dans les équipements pour rendre compatible les traitements de données du canal d'un appel dans les équipements.

La présente invention vise à fournir un équipement d'interconnexion entre une installation d'usager de type RNIS et un réseau à haut débit, qui puisse négocier des paramètres de fonctionnement pour chaque communication avec un équipement distant, en se basant sur des messages de signalisation RNIS de manière que ces messages soient transportés de manière transparente par le réseau à haut débit entre les deux équipements.

A cette fin, un équipement pour interconnecter des canaux de données associés à des messages de signalisation d'un accès numérique d'usager RNIS à travers un réseau à haut débit à des équipements distants similaires, est tel que défini dans la revendication 1.

Selon une caractéristique préférée, le traitement auquel sont soumises les données sont de la compression à l'émission et de la décompression à la réception, ce qui réduit la bande passante du moyen de transmission entre les deux équipements en communication. Ainsi, les moyens pour traiter les données d'émission et de réception comprennent respectivement plusieurs moyens pour compresser et décompresser les données en fonction d'algorithmes de compression/décompression différents, le type d'algorithme constituant l'un des paramètres à négocier.

Deux des paramètres à négocier, lorsqu'ils sont relatifs à une communication de voix, peuvent être le type d'algorithme de compression mis en oeuvre par des moyens pour traiter les données attribués aux canaux de données ayant trait à ladite communication de voix, et un mode de traitement de silences de voix dans lesdits canaux de données. Lorsque deux des paramètres à négocier sont relatifs à une communication de télécopie, ils peuvent être un type d'algorithme de compression mis en oeuvre par des moyens pour traiter les données attribués aux canaux de données ayant trait à ladite communication de télécopie, et un mode de fonctionnement de télécopie (MF) sans ou avec détection de porteuse. De manière plus générale, la télécopie et la "voix" pouvant être transmises par les mêmes canaux, les quatre paramètres précités sont inclus dans les messages de signalisation.

Le moyen pour introduire introduit en outre dans les messages de signalisation d'une communication, un numéro de port respectif de protocole de transport pour des paquets encapsulant les messages de signalisation et transmis dans le réseau à haut débit.

En pratique, comme on le verra ci-après, les paramètres et le numéro de port sont introduits dans un champ d'information d'usager à usager des messages de signalisation.

Deux catégories de négociation sont prévues.

Lorsque deux équipements n'ont qu'un ou très peu de modes de fonctionnement, la négociation est souvent restreinte à un signalement du mode de fonctionnement de chaque équipement à l'autre.

Lorsque l'un des équipements possède plusieurs modes de fonctionnement, il les présente à l'autre afin d'en sélectionner un compatible avec les deux équipements. Le moyen pour introduire transmet alors, après qu'il ait transmis des premiers paramètres introduits dans un message de signalisation d'établissement pour une communication avec un équipement distant et en réponse à des deuxièmes paramètres retirés par les moyens pour retirer dans un deuxième message de signalisation transmis par l'équipement distant, un troisième message de signalisation contenant les deuxièmes paramètres pour signaler une compatibilité de fonctionnement avec l'équipement distant, ou contenant au moins l'un des premiers paramètres pour signaler une incompatibilité de fonctionnement avec l'équipement distant.

L'un des deuxièmes paramètres peut être d'abord une liste de paramètres dans laquelle l'équipement distant sélectionne un paramètre compatible avec ses modes de fonctionnement.

Selon d'autres aspects de l'invention, l'équipement comprend un moyen pour encapsuler les messages de signalisation reconstruits en des paquets et les router dans le réseau à haut débit vers les équipements distants. Chaque paquet contient une adresse de routage de l'équipement distant lue dans une table de routage en correspondance avec un numéro d'appel de l'équipement distant. Un moyen attribue un numéro de référence en correspondance au numéro d'appel de l'équipement distant, aux canaux de données d'émission et de réception internes disponibles à travers les moyens pour traiter, pour chaque communication.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique de deux installations d'usager interconnectées à un réseau ATM à travers deux équipements d'interconnexion selon l'invention ;
- la figure 2 est une pile protocolaire mise en oeuvre dans un équipement d'interconnexion selon l'invention ;
- la figure 3 est un bloc-diagramme fonctionnel d'un circuit d'émission et d'un circuit de réception dans l'équipement d'interconnexion ;
- la figure 4 est une trame connue pour accès primaire RNIS ;
- la figure 5 montre un message de signalisation pour canal D d'accès primaire ;
- la figure 6 montre un message de signalisation reconstruit selon l'invention ;
- la figure 7 montre des champs de paramètre ajoutés dans le champ d'information d'usager à usager du message de signalisation reconstruit selon l'invention ;
- les figures 8 à 11 montrent des échanges de signaux de signalisation entre les équipements d'interconnexion selon l'invention respectivement ;
- la figure 12 est un diagramme montrant l'encapsulation d'un message de signalisation reconstruit dans un paquet IP ; et
- la figure 13 est un paquet IP encapsulant un message de données de "voix" selon l'invention.

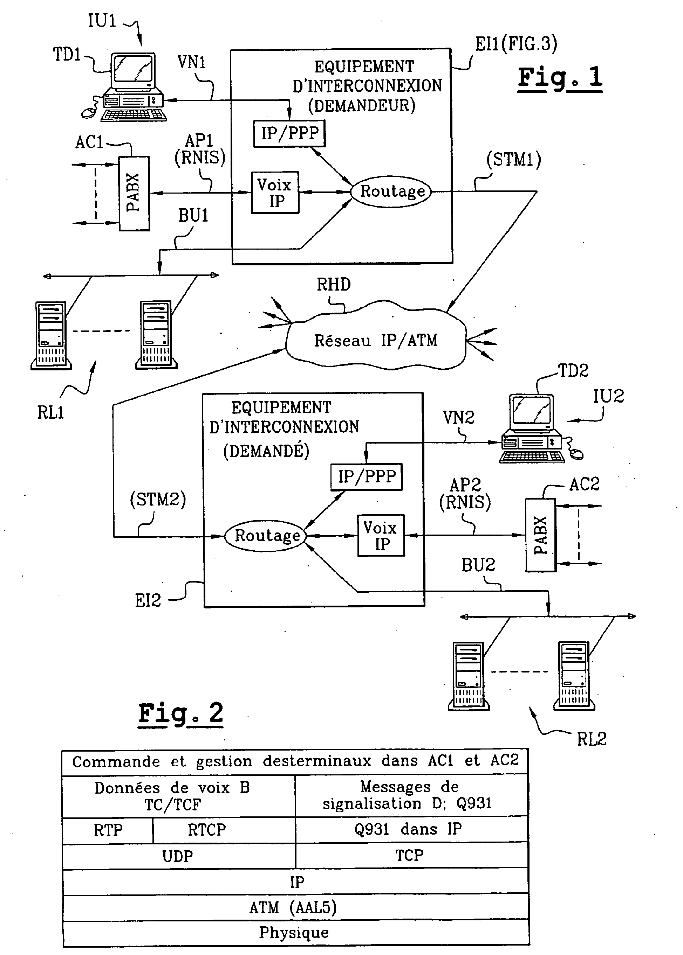

Selon la figure 1, plusieurs installations d'usager, telles que deux installations d'usager distantes IU1 et IU2, sont reliées à travers un réseau à haut débit RHD convoyant des paquets Internet IP (Internet Protocol) encapsulés dans des cellules en mode de transfert asynchrone ATM (Asynchonous Transfer Mode). Au niveau de l'interface usager/réseau, chaque installation d'usager IU1, IU2 est interconnectée au réseau RHD à travers un équipement d'interconnexion EI1, EI2 selon l'invention. Par exemple, chaque équipement EI1, EI2 est desservi par une voie de base de réseau ATM de type STM1 (Synchronous Transport Mode) ayant un débit nominal de 155 Mbit/s convoyant des cellules ATM normalisées contenant un en-tête de 5 octets incluant notamment un champ de routage VPI-VCI pour conduit et voie virtuels dans le réseau ATM, et un champ d'information de taille constante de 48 octets. Les paquets IP entre les installations sont ainsi acheminés avec la qualité de transmission liée au réseau ATM.

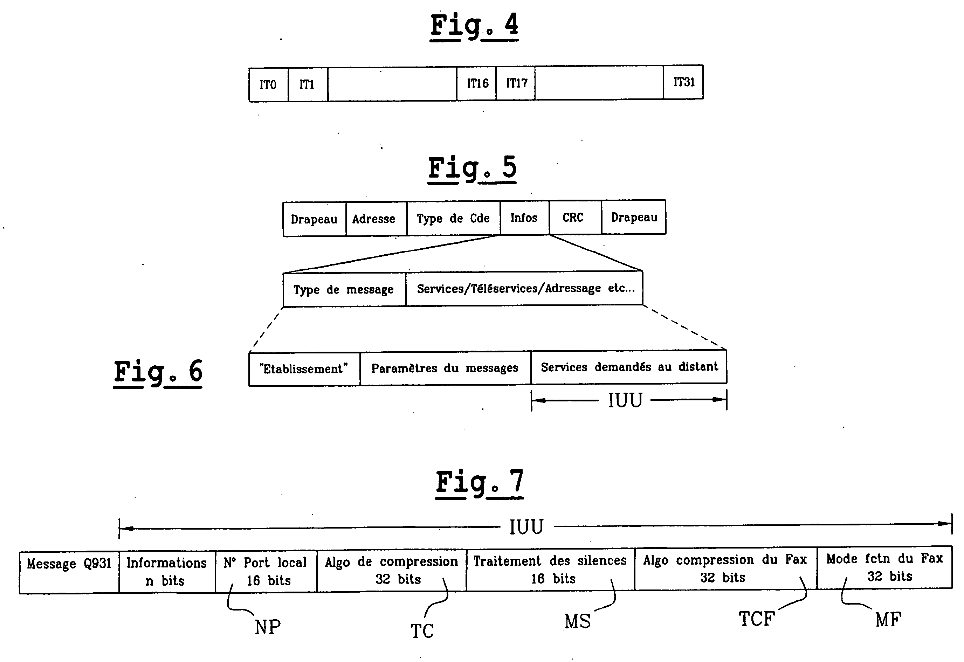

Chaque installation d'usager IU1, IU2 comprend, selon l'exemple illustré à la figure 1, un autocommutateur privé numérique AC1, AC2 de type PABX (Privat Automatic Branch eXchange) relié à l'équipement EI1, EI2 à travers un accès primaire bidirectionnel AP1, AP2 de réseau RNIS (Réseau Numérique à Intégration de Service) offrant 30 canaux de données B à 64 kbit/s et un canal de signalisation D à 64 kbit/s multiplexés dans des trames RNIS. Comme montré à la figure 4, une trame RNIS comprend 32 intervalles de temps IT0 à IT31 occupés par des octets de signaux numériques au débit de 64 kbit/s. Le premier intervalle IT0 sert au verrouillage de trame. Les intervalles IT1 à IT15 et IT17 à IT31 sont occupés par les 30 canaux de données B respectivement. L'intervalle de temps IT16 est occupé par le canal de signalisation D et supporte le protocole de communication LAPD (Link Access Protocol on the D-channel) des niveaux 2 et 3 selon les recommandations Q.921 et Q.931 du CCITT.

Comme montré à la figure 5, un message de signalisation dans le canal D est une trame comprenant un champ d'adresse à 2 octets, un identificateur de point d'accès au service SAPI (Service Access Point Identifier), en l'occurrence l'identificateur de l'autocommutateur AC1, et un identificateur de terminal récepteur TEI (Terminal End-Point Identifier), un champ de commande indiquant le type de trame et ayant deux octets par exemple pour indiquer un transfert d'informations et contenant le numéro de séquence de la trame et celui de la trame suivante attendue, un champ d'informations souvent de plusieurs octets et un champ de contrôle d'erreur à deux octets CRC. Pour les messages de signalisation avec transfert d'informations cités dans la suite de la description, lors de l'établissement d'une communication en mode en bloc ou en mode par chevauchement, de types "Etablissement" (Setup) "Appel en Cours" (Call Proceeding), "Alerte" (Alerting) et "Connexion" (Connect), le champ d'informations contient le type de message et des informations relatives aux services ou téléservices demandés, à l'adressage, etc.

En variante, l'accès primaire peut être remplacé par exemple par un accès de base avec deux canaux B à 64 kbit/s et un canal D à 16 kbit/s.

L'installation d'usager IU1, IU2 comprend également au moins un terminal de données TD1, TD2, tel qu'un routeur, un ordinateur ou un multiplexeur, relié par exemple par une voie numérique bidirectionnelle VN1, VN2 à travers une interface électrique symétrique de type V11, et un réseau local LAN (Local Area Network) RL1, RL2 de type Ethernet dont le bus bidirectionnel BU1, BU2 est relié à l'équipement EI1, EI2.

Dans ce contexte, chaque équipement EI1, EI2 assure suivant le sens de transmission de l'installation vers le réseau, le transport des messages de signalisation et de données RNIS relatifs notamment à de la voix en provenance de l'autocommutateur AC1, AC2 en mode paquet IP, et l'encapsulation de paquets de données pour liaison téléphonique selon le protocole PPP (Point-to-Point Protocol) transmis par le terminal de données TD1, TD2 et l'encapsulation de trames Ethernet transmises par le réseau RL1, RL2 en des paquets IP, afin de router tous ces paquets IP et les encapsuler dans des cellules ATM. L'équipement EI1, EI2 assure également, selon l'autre sens de transmission du réseau vers l'installation, des fonctions réciproques aux précédentes, ainsi que des services complémentaires de type serveur notamment pour le réseau local RL1, RL2.

S'agissant du service de données de "voix" qui permet de transporter de la "voix" proprement dite mais également des données de communications téléphoniques provenant notamment de terminaux téléphoniques, de modems ou de télécopieurs desservis par l'autocommutateur AC1, AC2, chaque équipement d'interconnexion EI1, EI2 fait appel à un certain nombre de protocoles afin d'échanger des paquets de "voix" IP entre les deux équipements à travers le réseau ATM et faire jouer le rôle de "réseau RNIS" à chaque équipement d'interconnexion par rapport à l'autocommutateur local respectif.

Les contraintes de fonctionnement de la "voix" sous forme de paquets IP et les modes de compression qui y sont associés nécessitent de s'appuyer, en référence à la figure 2 :
- sur le protocole de transport UDP (User Datagram Protocol) pour transmettre sous forme de paquets IP des données dans les canaux B notamment relatives à la "voix" au cours d'une communication téléphonique entre deux autocommutateurs ; le protocole UDP est par sa simplicité bien adapté à des applications en "temps réel" pour réduire le temps de transfert des paquets de voix ;
- sur les protocoles de transport en temps réel RTP (Real Time Protocol) et RTCP (Real Time Control Protocol) qui sont spécialement chargés de contrôler l'arrivée de paquets de voix IP/UDP en identifiant le type de source émettant chaque paquet IP, tel que voix, vidéo, données informatiques, le numéro de référence d'une communication contenu dans tous les paquets IP/UDP de la communication, le numéro des paquets, et le type de codage/décodage des données, par exemple le type de compression/décompression appliquées aux données ; en particulier, les protocoles RTP et RTCP détectent les paquets qui se perdent afin qu'un petit applicatif décide de remplacer par des blancs les paquets IP perdus ou qui n'arrivent pas dans l'ordre attendu, de façon à améliorer la perception auditive ;
- sur le protocole de transport TCP (Transport Control protocol) pour transmettre sous forme de paquets IP les messages de signalisation dans les canaux D des accès primaires RNIS ; le protocole TCP beaucoup plus fiable que le protocole UDP, puisque les paquets reçus sont remis selon leur ordre d'émission et les paquets erronés ou perdus sont réémis ; le protocole TCP assure une transmission fiable des messages de signalisation RNIS dans les canaux des accès primaires AP1, AP2 selon la recommandation Q.931 pour laquelle le temps de transit n'est pas primordial.

La pile des protocoles mise en oeuvre dans l'équipement d'interconnexion EI1, EI2 selon l'invention est ainsi illustrée à la figure 2. Au niveau de la couche liaison est indiquée la couche d'adaptation ATM AAL5 (ATM Adaptation Layer) qui permet la fragmentation des paquets IP en cellules ATM et l'assemblage de cellules ATM en paquets IP.

Les moyens fonctionnels dans un circuit d'émission CE et un circuit de réception CR pour émettre et recevoir de la signalisation et des données de "voix" vers et depuis le réseau ATM, tous deux inclus dans un équipement d'interconnexion, tel que l'équipement EI1, pour interconnecter l'autocommutateur respectif AC1 au réseau à haut débit RHD en mode ATM, sont maintenant décrits en détail.

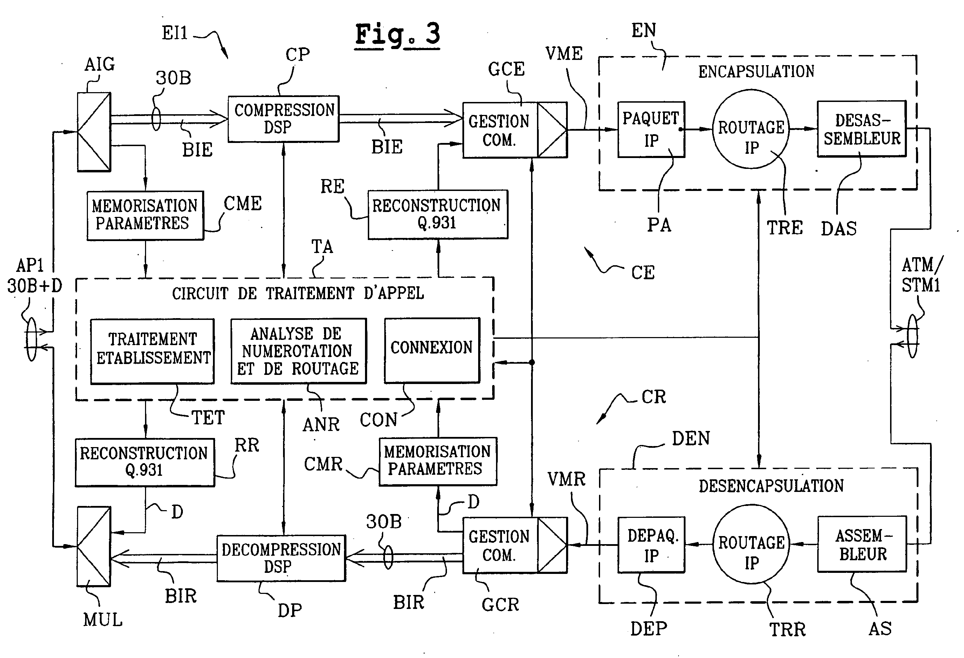

En référence maintenant à la figure 3, le circuit d'émission CE dans l'équipement d'interconnexion EI1, comprend entre l'accès primaire RNIS AP1 de l'autocommutateur AC1 et la liaison ATM/STM1 du réseau RHD en mode ATM, une chaîne de connexion d'émission comprenant un aiguilleur AIG, un circuit de compression CP, un circuit de gestion des communications à l'émission GCE et en sortie un circuit d'encapsulation EN.

L'aiguilleur AIG aiguille les trames RNIS à 32 intervalles de temps IT transmises dans l'accès AP1 par l'autocommutateur AC1 respectivement pendant l'intervalle de temps de trame IT16 vers un canal de signalisation D dans lequel les messages de signalisation selon la figure 5 sont appliqués à un circuit de mémorisation CME, et vers un bus interne d'émission BIE de 30 canaux de données parallèles B pendant les autres intervalles de temps de trame, à l'exception du premier intervalle de temps de verrouillage de trame IT0 servant à la récupération de l'horloge de trame dans l'aiguilleur. Dans l'aiguilleur AIG, à chaque canal de données B dans l'accès AP1 est attribué un canal interne B disponible ayant un numéro déterminé dans le bus BIE, comme précisé plus loin.

Le circuit de compression CP comprend plusieurs processeurs DSP (Digital Signal Processor) respectivement associés à quelques algorithmes de compression des données dans les canaux de données internes B, un algorithme de compression étant désigné lors de l'établissement d'une communication téléphonique par l'autocommutateur demandeur.

Le circuit de gestion des communications GCE gère des messages de signalisation reconstruits RNIS et contrôle la cohérence entre ces différents messages pour chaque communication. Le circuit GCE multiplexe également les canaux compressés B dans le bus interne BIE sortant du circuit de compression CP avec un canal de signalisation reconstruit D transmis par un circuit de reconstruction RE en une voie multiplex d'émission VME à trames de 32 intervalles de temps comme dans l'accès AP1. Un numéro de canal de sortie disponible B dans la voie d'émission VME est attribué à un canal occupé B dans le bus interne BIE lors du multiplexage. Le circuit d'encapsulation EN encapsule les messages de signalisation D et de données de "voix" B RNIS transmis dans la voie d'émission VME d'abord en des paquets Internet IP/TCP et IP/UDP, puis après routage IP à travers une table TRE, en des cellules de trames ATM.

Le circuit de mémorisation CME mémorise notamment les champs d'information dans les messages de signalisation (figure 5) du canal D séparé par l'aiguilleur AIG. Les messages de signalisation sont traités dans un circuit de traitement d'appel TA qui est commun aux circuits d'émission CE et de réception CR dans l'équipement EI1 et dont les fonctionnalités seront détaillées ci-après. Les messages de signalisation traités sont reconstruits dans le circuit de reconstruction RE au niveau de la couche 3 de la recommandation Q.931. Selon l'invention, les messages de signalisation lors de l'établissement d'appel qui peut être avec de la numérotation en mode en bloc ou en mode par chevauchement selon la recommandation Q.931, transmis par le canal D de l'accès primaire AP1 de l'autocommutateur AC1, tels que les messages "Etablissement", "Appel en Cours", "Alerte" et "Connexion" sont traités par le circuit de traitement d'appel TA. Des paramètres dans un champ "d'information d'usager à usager" IUU sont insérés dans le champ d'informations des messages de signalisation reconstruits, comme dans le message "Etablissement" reconstruit montré à titre d'exemple à la figure 6. Les paramètres sont à négocier avec l'autre extrémité demandée, supposée être en l'occurrence l'équipement d'interconnexion EI2.

Les paramètres qui doivent être négociés entre les deux équipements d'interconnexion afin de convenir d'un traitement commun des données dans le couple de canaux attribués B, après la réception du message "Connexion" par l'autocommutateur demandeur AC1 suite au décroché dans l'autocommutateur distant demandé AC2 pour une communication, et qui doivent être insérées dans le message "Etablissement" par le circuit de reconstruction RE sous la commande du circuit TA, sont les suivants, en référence à la figure 7 :
- le numéro de port NP selon le protocole RTP dans un champ à 16 bits, c'est-à-dire un numéro attribué à chaque communication par le circuit de traitement d'appel TA et inclus dans les champs IUU des messages de données de "voix" relatifs au canal de données B dans la voie VME associé à la communication à établir ; le numéro de port NP est attribué en correspondance avec un numéro de référence d'appel désignant la chaîne de connexion définie par les numéros du canal entrant dans l'accès AP1, du canal interne dans le bus BIE et du canal de sortie dans la voie VME ; le protocole RTP renvoie également à des codages différents existants c'est-à-dire à des algorithmes de compression dans le circuit CP, qui peuvent être appliqués à la voix, à la télécopie ou à la vidéo ;
- le type d'algorithme de compression TC dans un champ à 32 bits, sélectionné pour chaque communication de données de "voix" ; le type de compression est sélectionné dans le circuit de compression CP et un circuit de décompression DP par le circuit TA parmi plusieurs algorithmes de compression connus en soi, et pouvant être sélectionnés selon un ordre de priorité ;
- pour un service de "voix", le mode MS dans un champ à 16 bits pour détecter et traiter des silences entre des segments de voix dans le canal B au cours de la communication établie dans ce canal, les silences pouvant être compressés ou non compressés ;
- le type de l'algorithme de compression TCF dans un champ à 32 bits, sélectionné pour chaque communication de service, tel que télécopie (Fax), dans les circuits CP et DP par le circuit TA ; et
- le mode de fonctionnement de service MF dans un champ à 32 bits pour un service de télécopie (Fax) qui peut être avec ou sans détection de porteuse de modulation ; le type de service, en l'occurrence la télécopie, peut être transmis par l'autocommutateur demandeur AC1 dans le champ IUU du message "Etablissement".

Comme également montré à la figure 3, le circuit de réception CR dans l'équipement d'interconnexion EI1 comprend une chaîne de "Connexion" qui fonctionne à l'inverse de celle contenue dans le circuit d'émission CE. Cette chaîne de connexion comprend entre la liaison ATM/STM1 du réseau RHD et l'accès primaire AP1, un circuit de désencapsulation DEN, un circuit de gestion des communications à la réception GCR, un circuit de décompression DP et un multiplexeur MUL.

Le circuit de désencapsulation DEN désencapsule les cellules ATM transmises par le réseau RHD en des paquets IP, puis après routage IP à travers une table TRR les paquets IP/TCP et IP/UDP en des messages de signalisation de canal D et de données de canal B dans une voie multiplex de réception VMR véhiculant des trames RNIS à 32 intervalles de temps vers le circuit de gestion des communications GCR. Le circuit GCR vérifie la cohérence des messages reçus et démultiplexe la voie multiplex VMR en 30 canaux B parallèles dans un bus interne de réception BIR et un canal de signalisation D qui est appliqué à un circuit de mémorisation CMR. Le circuit CMR mémorise des paramètres des couches 2 et 3 des messages de signalisation RNIS transmis par les équipements distants avec lesquels l'équipement EI1 est en communication. Le circuit CMR est analogue au circuit CME et est relié au circuit de traitement d'appel TA.

Le circuit de décompression DP décompresse chaque canal démultiplexé B dans le bus BIR en fonction du type d'algorithme de décompression TC ou TCF négocié avec l'équipement distant et correspondant au processeur DSP et à l'algorithme de compression sélectionnés dans le circuit CP pour la communication supportée par le canal B ; les algorithmes de compression et décompression sélectionnés sont confirmés par l'équipement d'interconnexion demandé à l'équipement d'interconnexion demandeur dans le champ "d'information d'usager à usager" IUU d'un message de signalisation "Information", "Appel en cours", "Alerte", ou "Connexion".

Le multiplexeur MUL multiplexe les canaux décompressés B dans le bus interne BIR et un canal de signalisation de réception D reconstruit dans un circuit de reconstruction RR, dans l'accès primaire AP1. Le circuit RR retire dans le champ "d'information d'usager à usager" IUU du message d' "Etablissement" pour un équipement demandé et des messages "Information", "Appel en cours", "Alerte" ou "Connexion" pour un équipement demandeur, les paramètres relatifs à la négociation entre équipements d'interconnexion afin d'appliquer ces messages ainsi traités au multiplexeur MUL.

Comme dans le circuit d'émission CE, le numéro de référence d'appel attribué à une communication par le circuit de traitement d'appel TA fait correspondre les numéros du canal entrant B de ladite communication dans la voie multiplex VMR, d'un canal B disponible dans le bus interne de réception BIR et du canal sortant B dans l'accès primaire AP1. A priori, dans l'équipement d'interconnexion distant pour ladite communication, le numéro du couple de canaux internes dans les bus BIE et BIR est différent de celui attribué dans l'équipement EI1.

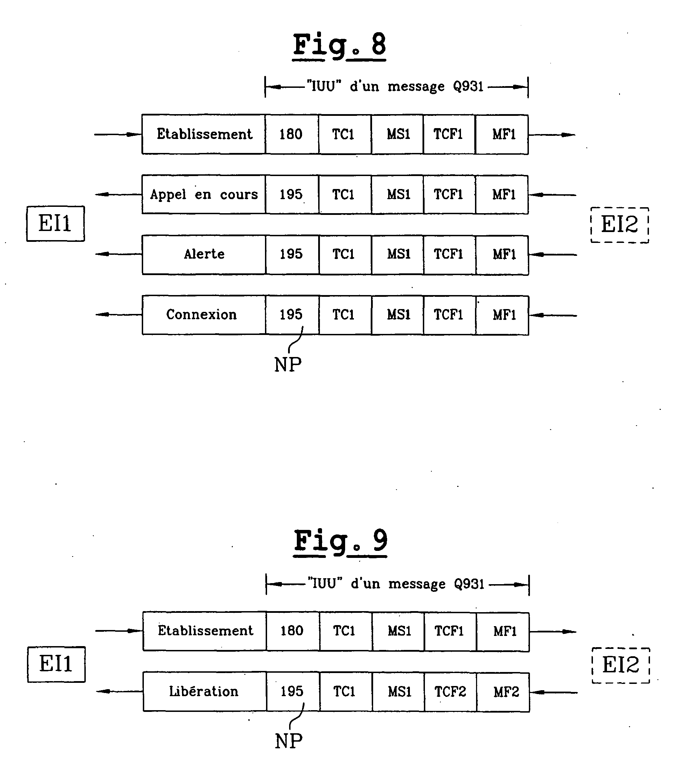

A titre d'exemples, les figures 8, 9, 10 et 11 montrent des messages de signalisation au cours de la négociation entre l'équipement EI1 de l'autocommutateur demandeur AC1 transmettant un message "Etablissement" et l'équipement EI2 de l'autocommutateur demandé AC2.

La figure 8 montre la compatibilité de l'équipement demandé avec l'équipement demandeur sur au moins un type de compression TC1 et un mode de fonctionnement MF1 pour données de "voix", ou TCF1 et MF1 pour données de télécopie, dès le premier message "Appel en cours" succédant au message "Etablissement".

Au contraire, la figure 9 concerne une incompatibilité des fonctionnements entre les autocommutateurs AC1 et AC2. Par exemple, le type de compression TCF1 et le mode de fonctionnement MF1 typiquement avec détection de porteuse dans l'équipement EI1 sont incompatibles avec ceux TCF2 et MF2 typiquement sans porteuse dans l'équipement EI2, pour une communication de télécopie. Ceci impose une réponse "Libération" de l'équipement demandé EI2 après le message "Etablissement".

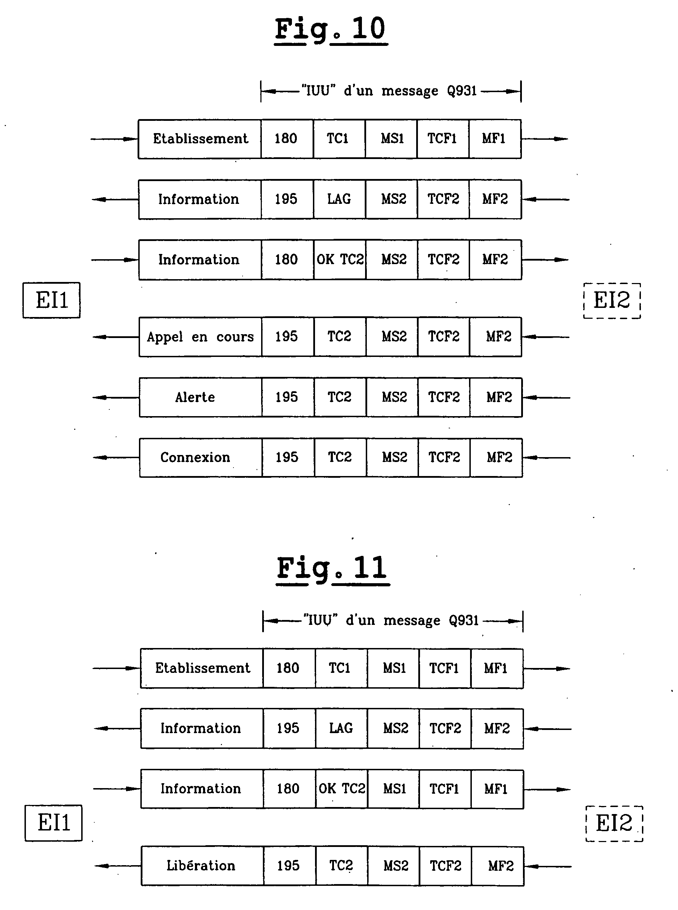

Dans la figure 10, les fonctionnements des autocommutateurs AC1 et AC2 ne sont pas a priori compatibles, le premier transmettant un type de compression de "voix" TC1, un traitement des silences en compression MS1, un type de compression de télécopie TCF1 et un mode de fonctionnement de télécopie MF1 dans le message "Etablissement" différents de ceux retransmis LAG, MS2, TCF2 et MF2 dans un message "Information" par l'équipement EI2. En particulier, l'équipement demandé EI2 cherche à négocier une communication de "voix" en insérant une liste d'algorithmes de compression LAG pour communication de "voix" dans le champ TC du premier message "Information". En retour, l'équipement demandeur EI1 transmet le type TC2 d'algorithme de compression qu'il a choisi dans la liste LAG et qui est contenu dans ses circuits CP et DP, dans le champ TC d'un autre message "Information". Ce dernier message confirme également le mode de traitement des silences sans compression MS2, le type d'algorithme de compression TCF2 et le mode de fonctionnement MF2 sans détection de porteuse pour communication de télécopie, proposés par l'équipement EI2 dans le premier message "Information". Puis, tous les messages suivants contiennent les paramètres négociés précédemment.

Au contraire de la figure 10, la figure 11 montre un échec de négociation. Après un message "Etablissement" transmis par l'équipement EI1 et un premier message "Information" transmis par l'équipement EI2, comme ceux dans la figure 10, l'équipement demandeur EI1 maintient le mode de traitement du silence avec compression MS1, le type d'algorithme de compression TCF1 et le mode de fonctionnement MF1 avec détection de porteuse pour communication de télécopie dans le deuxième message "Information". Les propositions de l'équipement EI2 ayant été refusées par l'équipement EI1, l'équipement EI2 transmet alors un message "Libération".

Le circuit de traitement d'appel TA commun au circuit d'émission CE et au circuit de réception CR dans l'équipement d'interconnexion selon l'invention comprend essentiellement trois blocs fonctionnels, à savoir un bloc TET pour traiter essentiellement le message d' "Etablissement" de chaque communication, un bloc d'analyse de numérotation et de routage ANR, et un bloc de Connexion CON.

Il sera supposé dans la suite que l'équipement EI1 est un équipement "demandeur" pour une communication téléphonique associée à au moins un couple de canaux B donné dans l'accès primaire AP1, les bus internes BIE et BIR et les voies VME et VMR, et est en relation avec un équipement "demandé" EI2, suite à un appel d'un terminal téléphonique de l'autocommutateur AC2 par un terminal téléphonique de l'autocommutateur AC1.

Le **bloc de traitement d'établissement TET** assure les fonctions principales suivantes:
1) La mémorisation d'éléments d'information nécessaires à la négociation entre les autocommutateurs AC1 et AC2 et contenus dans le message d' "Etablissement" ou introduits par configuration d'une part, et l'allocation d'un numéro de référence d'appel attribué à chaque communication à établir afin que le circuit de traitement d'appel TA suive les différentes communications établies en relation avec l'autocommutateur AC1, d'autre part.
2) La gestion des canaux internes dans les bus BIE et BIR et les voies VME et VMR associés au numéro de référence d'appel et au numéro de canal B pendant la durée de chaque communication.
3) La cohérence et le suivi des messages de signalisation aussi bien pendant la phase d' "Etablissement" que pendant la phase d'échange d'informations entre les équipements EI1 et EI2.
4) La réservation de ressources internes nécessaires au traitement de chaque communication en fonction du contenu du champ d'information dans le message "Etablissement" et d'informations internes à l'équipement demandeur EI1 et relatives aux paramètres à négocier et en particulier à l'allocation des processeurs de compression et décompression DSP dans les circuits CP et DP correspondant à l'algorithme de compression négocié.
5) La numérotation dans l'équipement demandeur EI1 pour mémoriser le numéro d'appel de l'autocommutateur demandé contenu dans le message "Etablissement" lorsque la numérotation est en mode en bloc, et mémorise les chiffres du numéro d'appel de l'autocommutateur demandé contenus dans les messages "Information" lorsque la numérotation est en mode par chevauchement, afin d'attribuer un numéro de référence à la communication en cours d'établissement, en correspondance avec les numéros d'appel des autocommutateurs demandeur et demandé.
6) Un relais d'échange entre les équipements EI1 et EI2 par l'adjonction du champ "information d'usager à usager" contenant des informations à négocier dans le message de signalisation "Etablissement" émis par le circuit RE de l'équipement demandeur EI1, et par le retrait du champ "information d'usager à usager" dans les messages de signalisation émis par l'équipement demandé EI2 vers l'autocommutateur AC2 en réponse au message "Etablissement" de l'équipement demandeur.
   Typiquement, le circuit de reconstruction RE dans l'équipement demandeur EI1 insère dans le champ "d'information d'usager à usager" IUU du message d' "Etablissement" tous les cinq paramètres nécessaires à la négociation d'un service de "voix", et à un service de télécopie, en correspondance avec le numéro de référence d'appel attribué à la chaîne de connexion dans l'équipement demandeur. En réponse à ce message d' "Etablissement" dont les paramètres sont mémorisés dans le circuit CME de l'équipement demandé EI2, le circuit de reconstruction RE de celui-ci retourne un message d'accusé de réception sous forme de paramètres insérés dans le champ "Information d'usager à usager" IUU dans l'un des messages "Information", "Appel en cours", "Alerte" et "Connexion" ou "Libération" à destination de l'équipement demandeur EI1. Comme montré aux figures 8 à 11, ce message d'accusé de réception pour un service négocié contient des paramètres relatifs au numéro de port RTP affecté dans l'équipement demandé EI2 pour la communication, la compatibilité avec les types d'algorithme de compression demandé et les modes de fonctionnement, en correspondance avec le numéro de référence d'appel attribué à la chaîne de connexion dans l'équipement demandé, pour assurer la correspondance avec l'équipement demandeur.
   Si l'équipement demandé EI2 ne peut accusé réception aux paramètres du service demandé, ou s'il ne dispose pas des ressources nécessaires au moment de la demande de négociation, l'équipement demandé EI2 libère l'appel en émettant un message de "Libération" vers l'équipement demandeur EI1 à travers le réseau RHD.
7) La gestion des erreurs et des incidents reçus par les autocommutateurs et équipements locaux ou distants, ainsi que les différents états et messages de signalisation qui peuvent se présenter entre l' "Etablissement" et la "Libération" d'une connexion selon la recommandation Q.931.

Le **bloc d'analyse de numérotation et de routage ANR** analyse, traite et compare le numéro RNIS de l'usager demandé, en l'occurrence un numéro d'appel téléphonique du type 0I ABPQ MCDU, de l'autocommutateur demandé AC2 inclus avec le numéro RNIS de l'autocommutateur demandeur AC1, en tant qu'éléments d'information, dans le message "Etablissement" transmis dans le canal D par l'autocommutateur demandeur AC1 à travers l'aiguilleur AIG.

En correspondance avec le préfixe 0I ABPQ, le bloc ANR trouve dans une table de routage TRE interne au circuit d'encapsulation EN, une adresse de routage @EI2 en mode IP de l'équipement demandé EI2, le suffixe MCDU désignant un terminal téléphonique de l'autocommutateur AC2 associé à l'équipement d'interconnexion demandé EI2. L'adresse IP @EI2 est ajoutée aux numéros RNIS des équipements demandé et demandeur dans le message "Etablissement" retransmis par le circuit de reconstruction RE.

En variante, si un type de compression particulier TC est désiré pour des communications, l'équipement demandeur EI1 ajoute avec l'adresse de routage @EI2 le type de compression TC qu'il trouve également dans la table en correspondance avec le préfixe OI ABPQ afin d'inclure l'adresse destinataire OI ABPQ/TC/@EI2 dans le message "Etablissement" retransmis. En dépendance du préfixe du numéro de demandé et du numéro de référence d'appel attribué à la communication en cours, l'équipement demandeur EI1 construit la chaîne de liaison entre les deux autocommutateurs, constituée par l'autocommutateur demandeur AC1, le numéro du canal B correspondant dans l'accès primaire AP1, l'équipement d'interconnexion demandeur EI1, le numéro du canal de sortie B dans la voie multiplex VME de l'équipement EI1, l'équipement d'interconnexion demandé EI2, le numéro du canal B dans la voie multiplex VMR dans l'équipement EI2, le numéro du canal B dans l'accès AP2 et l'autocommutateur demandé AC2.

En outre, le bloc ANR dans l'équipement demandeur EI1 traite le cas échéant l'adresse de l'autocommutateur demandé AC2 en remplaçant certaines parties du préfixe de son numéro d'appel RNIS de manière à faire transiter les messages correspondant à la communication par un autre chemin par exemple plus rapide ou moins coûteux. Dans l'équipement d'interconnexion demandé EI2, le bloc ANR supprime le préfixe 0I ABPQ pour ne transmettre que le suffixe de terminal téléphonique MCDU en tant que numéro d'usager demandé à l'autocommutateur AC2.

Le **bloc de connexion CON** initialise la "Connexion" de la chaîne des circuits internes à l'équipement EI1 entre l'aiguilleur AIG et le désassembleur DAS dans le circuit d'émission CE en réponse à un message "Etablissement" d'un appel reçu dans le circuit CME. Le bloc CON vérifie que le canal B qui est demandé dans l'accès primaire desservant l'autocommutateur demandé est libre, ou bien lui affecte un autre canal B disponible dans la mesure où le canal B demandé est occupé, ou refuse l'appel. Le bloc CON trie parmi toutes les informations reçues et internes, celles qui sont nécessaires aux services demandés à l'équipement distant EI2 et qui sont à insérer dans le champ "d'information d'usager à usager" IUU des messages de signalisation reconstruits dans le circuit RE, comme montré aux figures 6 et 7.

La chaîne de liaison précisée ci-dessus permet également d'établir le cheminement des paquets IP dans le réseau RHD en mode ATM.

Le circuit d'encapsulation EN dans le circuit d'émission CE (figure 3) comprend essentiellement un paquetiseur PA et un désassembleur DAS.

Le paquetiseur PA encapsule chaque message de signalisation reconstruit (figure 6) selon la recommandation Q.931, transmis dans la voie VME en un paquet IP selon le protocole Internet et fournit en tant qu'adresse IP du destinataire l'adresse @EI2 trouvée dans la table de routage d'émission TRE.

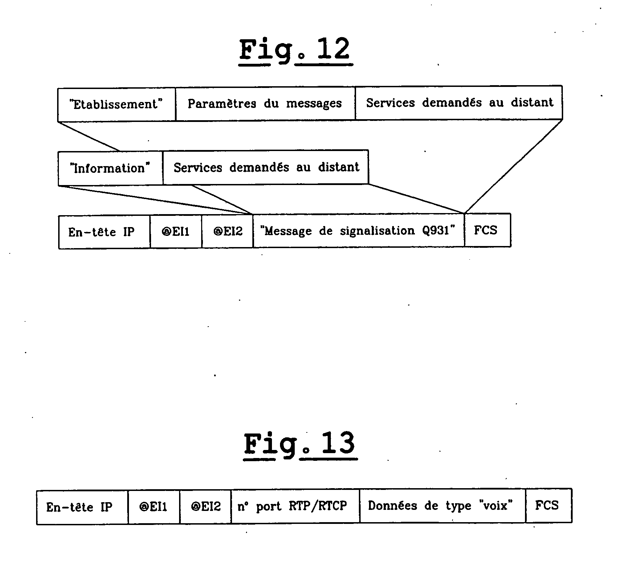

Comme montré à la figure 12, un message de signalisation reconstruit est encapsulé dans un paquet IP après un en-tête et les adresses IP @EI1 et @EI2 et avant une séquence de contrôle d'erreur FCS, et peut être un message "Informations" lorsqu'il y a recherche de compatibilité sur un mode de fonctionnement entre les autocommutateurs AC1 et AC2.

Dès le premier échange entre les deux équipements EI1 et EI2 au début de l'établissement d'une communication, une session selon le protocole TCP est ouverte entre les deux équipements et tous les messages protocolaires sont échangés pendant cette session, c'est-à-dire aussi bien les messages envoyés par les autocommutateurs AC1 et AC2 que les messages "propres" aux échanges entre les équipements EI1 et EI2. Cette session reste ouverte entre les équipements jusqu'à ce que l'un d'eux rompt la session.

Ainsi, selon l'invention, les équipements EI1 et EI2 dialoguent entre eux en se basant sur des messages de signalisation RNIS selon la recommandation Q.931, et ne nécessite donc pas l'établissement d'un canal spécifique.

S'agissant de l'affectation des ports RTP/RTCP, chaque équipement EI1, EI2 contient initialement par configuration un nombre de numéros de port RTP/RTCP égal au nombre de communications que l'équipement peut traiter simultanément. Le bloc TET dans le circuit TA cherche un numéro de port libre à l'établissement de chaque communication. Ce numéro de port affecté à la communication est transmis à l'équipement distant en l'introduisant dans le champ IUU du message "Etablissement", puis est remis à disposition pour une autre communication, en réponse au message "Libération" ou "Déconnexion" de l'autocommutateur demandeur.

Les messages de données de "voix" transmis par le circuit CGE sont également encapsulés dans le paquetiseur PA, ledit numéro de port RTP/RTCP affecté par le bloc TET étant inséré en tête du message de données, devant les adresses IP dans le paquet IP, comme montré à la figure 13.

Les paquets IP ainsi constitués sont encapsulés dans des cellules en mode ATM dans un désassembleur DAS, chaque cellule ATM contenant une adresse de destination constituée par une adresse de chemin de routage virtuel VCI/VPI lue dans une table de résolution d'adresses en fonction de l'adresse de destination IP.

D'une manière réciproque, à l'entrée du circuit de réception CR, le circuit de désencapsulation DEN comprend un assembleur AS qui assemble des cellules en mode ATM transmis par le réseau RHD en des paquets IP en fonction d'une table de résolution d'adresses de circuits virtuels ATM. Puis à l'aide d'une table de routage de réception TRR, réciproque de la table TRE, un dépaquetiseur DEP récupère les messages de signalisation et de données RNIS dans les canaux B et D de la voie VMR à partir des paquets IP reçus pour les démultiplexer dans le circuit de gestion GCR.

## Revendications

1. Equipement (EI1) pour interconnecter des canaux de données associés à des messages de signalisation d'un accès numérique d'usager RNIS (AP1) à travers un réseau à haut débit (RHD) à des équipements distants similaires (EI2), des paramètres pour traiter les données dans les canaux de données étant transmis avec les messages de signalisation vers les équipements distants, **caractérisé en ce qu'**il comprend un premier moyen (AIG) pour séparer un canal de signalisation d'émission (D) et les canaux de données d'émission (B) dans un accès d'usager (AP1), un moyen (CME, TA, RE) pour introduire des paramètres (TC, MS, TCF, MF) dans chacun des messages de signalisation du canal de signalisation d'émission séparé (D) afin de transmettre des messages de signalisation reconstruits, un moyen (CP) pour traiter les données dans les canaux de données d'émission (B) en fonction des paramètres introduits respectivement dans les messages de signalisation reconstruits relatifs auxdits canaux de données d'émission séparés et après avoir été négociés avec les équipements distants respectifs (EI2) lors d'établissement de communications, un premier moyen (CGE) pour multiplexer les canaux de données traitées et le canal de signalisation avec les messages de signalisation reconstruits vers les équipements distants (EI2) à travers le réseau à haut débit (RHD), un deuxième moyen (CGR) pour séparer un canal de signalisation de réception (D) et des canaux de données de réception (VMR) reçus depuis les équipements distants (EI2) à travers le réseau à haut débit (RHD), un moyen (CMR, TA, RR) pour retirer les paramètres (TC, MS, TCF, MF) dans chacun des messages de signalisation reconstruits du canal de signalisation de réception (D) afin de les comparer avec les paramètres respectivement introduits lors d'établissement des communications, un moyen (DP) pour traiter les données dans les canaux de données de réception en fonction des paramètres négociés respectivement relatifs aux communications, et un deuxième moyen (MUL) pour multiplexer les canaux de données traitées de réception (BIR) et le canal de signalisation de réception avec des messages de signalisation ayant les paramètres retirés vers l'accès d'usager (AP1) le moyen pour introduire (CME, TA, RE) transmettant, en réponse à des premiers paramètres retirés par le moyen pour retirer (CMR, TA, RR) dans un message de signalisation d'établissement (TC1, MS1, TCF1, MF1) pour une communication avec un équipement distant (EI2), un message de signalisation contenant les premiers paramètres pour signaler une compatibilité de fonctionnement avec l'équipement distant, ou un message de signalisation de libération contenant au moins un deuxième paramètre (TCF2, MF2) différent du premier paramètre correspondant (TCF1, MF1) pour signaler une incompatibilité de fonctionnement avec l'équipement distant.

2. Equipement conforme à la revendication 1, dans lequel les moyens pour traiter les données dans les canaux de données d'émission et de réception (CP, DP) comprennent respectivement plusieurs moyens pour compresser et décompresser les données en fonction d'algorithmes de compression/décompression différents, le type d'algorithme constituant l'un des paramètres à négocier.

3. Equipement conforme à la revendication 1 ou 2, dans lequel deux des paramètres à négocier sont un type d'algorithme de compression (TC) mis en oeuvre par les moyens pour traiter les données (CP, DP) attribués aux canaux de données (B) ayant trait à une communication de voix, et un mode de traitement (MS) de silences de voix, dans lesdits canaux de données.

4. Equipement conforme à l'une quelconque des revendications 1 à 3, dans lequel deux des paramètres à négocier sont un type d'algorithme de compression (TCF) mis en oeuvre par les moyens pour traiter les données (CP, DP) attribués aux canaux de données (B) ayant trait à une communication de télécopie, et un mode de fonctionnement de télécopie (MF) sans ou avec détection de porteuse.

5. Equipement conforme à l'une quelconque des revendications 1 à 4, dans lequel le moyen pour introduire (CME, TA, RE) introduit en outre dans les messages de signalisation d'une communication, un numéro de port respectif (NP) de protocole de transport pour des paquets encapsulant les messages de signalisation (D) et transmis dans le réseau à haut débit (RHD).

6. Equipement conforme à l'une quelconque des revendications 1 à 5, dans lequel au moins les paramètres (TC, MS, TCF, MF) sont introduits dans un champ d'information d'usager à usager (IUU) des messages de signalisation (D).

7. Equipement conforme à l'une quelconque des revendications 1 à 6, dans lequel le moyen pour introduire (CME, TA, RE) transmet, après qu'il ait transmis des premiers paramètres (TC1, MS1, TCF1, MF1) introduits dans un message de signalisation d'établissement pour une communication avec un équipement distant (EI2) et en réponse à des deuxièmes paramètres (LAG, MS2, TCF2, MF2) retirés par les moyens pour retirer (CMR, TA, RR) dans un deuxième message de signalisation transmis par l'équipement distant (EI2), un troisième message de signalisation contenant les deuxièmes paramètres (TC2, MS2, TCF2, MF2) pour signaler une compatibilité de fonctionnement avec l'équipement distant, ou contenant au moins l'un des premiers paramètres (MS1, TCF1, MF1) pour signaler une incompatibilité de fonctionnement avec l'équipement distant.

8. Equipement conforme à la revendication 7, dans lequel l'un des deuxièmes paramètres est une liste de paramètres (LAG).

9. Equipement conforme à l'une quelconque des revendications 1 à 8, comprenant un moyen (EN) pour encapsuler les messages de signalisation reconstruits (VME) en des paquets (IP) et les router dans le réseau à haut débit (RHD) vers les équipements distants (EI2), chaque paquet contenant une adresse de routage (@EI2) de l'équipement distant (EI2) lue dans une table de routage (TRE) en correspondance avec un numéro d'appel de l'équipement distant, et un moyen (TA, TRE) pour attribuer un numéro de référence en correspondance au numéro d'appel de l'équipement distant, aux canaux de données d'émission et de réception internes disponibles (B, BIE, BIR) à travers les moyens pour traiter (CP, DP), pour chaque communication.

## Claims

1. Equipment (EI1) for interconnecting data channels associated with signalling messages from an ISDN digital user access (AP1) through a broadband network (BN) to similar remote equipment (EI2), parameters for processing the data in the data channels being transmitted with the signalling messages to the remote equipment,
**characterised in that** it comprises a first means (AIG) for separating a transmission signalling channel (D) and these data transmission channels (B) in one user access (AP1), a means (CME, TA, RE) for introducing parameters (TC, MS, TCF, MF) into each of the signalling messages from the separate transmission signalling channel (D) in order to transmit reconstructed signalling messages, a means (CP) for processing the data in the data transmission channels (B) as a function of the parameters introduced respectively into the reconstructed signalling messages relative to those separate data transmission channels and after having been negotiated with the respective remote equipment (EI2) when setting up communications, a first means (CGE) for multiplexing the processed data channels and the signalling channel with the reconstructed signalling messages to the remote equipment (EI2) through the broadband network (BN), a second means (CGR) for separating a reception signalling channel (D) and data reception channels (VMR) received from the remote equipment (EI2) through the broadband network (BN), a means (CMR, TA, RR) for withdrawing parameters (TC, MS, TCF, MF) in each of the reconstructed signalling messages from the reception signalling channel (D) in order to compare them with the parameters introduced respectively when setting up communications, a means (DP) for processing the data in the data reception channels as a function of the negotiated parameters respectively relative to the communications, and a second means (MUL) for multiplexing the processed data reception channels (BIR) and the reception signalling channel with signalling messages having the withdrawn parameters to the user access (AP1), the means for introducing (CME, TA, RE) transmitting, in response to first parameters withdrawn by the means for withdrawing (CMR, TA, RR), in a setup signalling message (TC1, MS1, TCF1, MF1) for communication with remote equipment (EI2), a signalling message containing the first parameters for signalling operating compatibility with the remote equipment, or a release signalling message containing at least one second parameter (TCF2, MF2) which is different from the corresponding first parameter (TCF1, MF1) for signalling operating incompatibility with the remote equipment.

2. Equipment according to claim 1, in which the means for processing the data in the data transmission and reception channels (CP, DP) comprise respectively a plurality of means for compressing and decompressing the data as a function of different compression/decompression algorithms, the type of algorithm constituting one of the parameters to be negotiated.

3. Equipment according to claim 1 or 2, in which two of the parameters to be negotiated are a type of compression algorithm (TC) implemented by the means for processing the data (CP, DP) attributed to the data channels (B) relating to a voice communication, and a mode (MS) for processing voice silences, in said data channels.

4. Equipment according to any of the claims 1 to 3, in which two of the parameters to be negotiated are a type of compression algorithm (TCF) implemented by the means for processing the data (CP, DP) attributed to the data channels (B) relating to a fax communication, and a fax operating mode (MF) with or without detection of the carrier.

5. Equipment according to any of the claims 1 to 4, in which the means for introducing (CME, TA, RE) introduces furthermore, into the signalling messages of a communication, a respective port number (NP) of the transport protocol for the packets which encapsulate the signalling messages (D) and are transmitted in the broadband network (BN).

6. Equipment according to any of the claims 1 to 5, in which at least the parameters (TC, MS, TCF, MF) are introduced in a user information field for using (IUU) signalling messages (D).

7. Equipment according to any of the claims 1 to 6, in which the means for introducing (CME, TA, RE) transmits, after it has transmitted first parameters (TC1, MS1, TCF1, MF1) introduced into a setup signalling message for a communication with remote equipment (EI2) and in response to second parameters (LAG, MS2, TCF2, MF2) withdrawn by the means for withdrawing (CMR, TA, RR) in a second signalling message transmitted by the remote equipment (EI2), a third signalling message containing the second parameters (TC2, MS2, TCF2, MF2) for signalling operating compatibility with the remote equipment, or containing at least one of the first parameters (MS1, TCF1, MF1) for signalling operating incompatibility with the remote equipment.

8. Equipment according to claim 7, in which one of the two parameters is a list of parameters (LAG).

9. Equipment according to any of the claims 1 to 8, comprising a means (EN) for encapsulating the reconstructed signalling messages (VME) in packets (IP) and routing them in the broadband network (BN) to the remote equipment (EI2), each packet containing a routing address (@EI2) of the remote equipment (EI2) read in a routing table (TRE) corresponding to a phone number of the remote equipment, and a means (TA, TRE) for attributing a reference number corresponding to the phone number of the remote equipment, to data transmission channels and internal available reception channels (B, BIE, BIR) through the means for processing (CP, DP), for each communication.

## Patentansprüche

1. Einrichtung (EI1) zum Verbinden von Datenkanälen, die Signalisierungsnachrichten eines ISDN-Benutzer-Digitalzugangs (AP1) zugeordnet sind, über ein Hochgeschwindigkeitsnetz (RHD) mit ähnlichen entfernten Einrichtungen (EI2), wobei Parameter zur Verarbeitung der Daten in den Datenkanälen mit den Signalisierungsnachrichten an die entfernten Einrichtungen übertragen werden, **dadurch gekennzeichnet, dass** sie ein erstes Mittel (AIG) aufweist zum Trennen eines Sendesignalisierungskanals (D) von den Sendedatenkanälen (B) in einem Benutzer-Zugang (AP1), ein Mittel (CME, TA, RE) zum Einbringen von Parametern (TC, MS, TCF, MF) in alle Signalisierungsnachrichten des getrennten Sendesignalisierungskanals (D) zur Übertragung von rekonstruierten Signalisierungsnachrichten, ein Mittel (CP) zur Verarbeitung der Daten in den Sendedatenkanälen (B) in Abhängigkeit von den jeweils in die auf die getrennten Sendedatenkanäle bezogenen rekonstruierten Signalisierungsnachrichten eingebrachten Parametern und nach der Aushandlung mit den jeweiligen entfernten Einrichtungen (EI2) beim Kommunikationsaufbau, ein erstes Mittel (CGE) zum Multiplexen der Verarbeitete-Daten-Kanäle und des Signalisierungskanals mit den rekonstruierten Signalisierungsnachrichten an die entfernten Einrichtungen (EI2) über das Hochgeschwindigkeitsnetz (RHD), ein zweites Mittel (CGR) zum Trennen eines Empfangssignalisierungskanals (D) von Empfangsdatenkanälen (VMR), die von den entfernten Einrichtungen (EI2) über das Hochgeschwindigkeitsnetz (RHD) empfangen werden, ein Mittel (CMR, TA, RR) zum Herausziehen der Parameter (TC, MS, TCF, MF) in allen rekonstruierten Signalisierungsnachrichten des Empfangssignalisierungskanals (D), um diese mit den beim Kommunikationsaufbau jeweils eingebrachten Parametern zu vergleichen, ein Mittel (DP) zum Verarbeiten der Daten in den Empfangsdatenkanälen in Abhängigkeit von den jeweils bezogen auf die Kommunikation ausgehandelten Parametern, und ein zweites Mittel (MUL) zum Multiplexen der Empfangs-Verarbeitete-Daten-Kanäle (BIR) und des Empfangssignalisierungskanals mit den Signalisierungsnachrichten mit den herausgezogenen Parametern an den Benutzer-Zugang (API), wobei das Mittel zum Einbringen (CME, TA, RE) als Antwort auf erste Parameter, die von dem Mittel (CMR, TA, RR) zum Herausziehen in einer Signalisierungsnachricht zum Aufbau (TC1, MS1, TCF1, MF1) für eine Kommunikation mit einer entfernten Einrichtung (EI2) herausgezogen wurden, eine Signalisierungsnachricht mit den ersten Parametern überträgt, um eine funktionelle Kompatibilität mit der entfernten Einrichtung zu signalisieren, oder eine Freigabesignalisierungsnachricht mit wenigstens einem sich von dem entsprechenden ersten Parameter (TCF1, MF1) unterscheidenden zweiten Parameter (TCF2, MF2), um eine funktionelle Inkompatibilität mit der entfernten Einrichtung zu signalisieren.

2. Einrichtung nach Anspruch, wobei die Mittel zum Verarbeiten der Daten in den Sende- und Empfangsdatenkanälen (CP, DP) jeweils mehrere Mittel zum Komprimieren und Dekomprimieren der Daten in Abhängigkeit von unterschiedlichen Kompressions- /Dekompressionsalgorithmen aufweisen, wobei der Algorithmustyp einen der auszuhandelnden Parameter darstellt.

3. Einrichtung nach Anspruch 1 oder 2, wobei zwei der auszuhandelnden Parameter ein Kompressionsalgorithmustyp (TC)ist, der von den Mitteln zum Verarbeiten der Daten (CP, DP) ausgeführt wird, die eine Sprachkommunikation betreffenden Datenkanälen (B) zugewiesen sind, und ein Sprachpause-Verarbeitungsmodus (MS) in den Datenkanälen.

4. Einrichtung nach einem der Ansprüche 1 bis 3, wobei zwei der auszuhandelnden Parameter ein Kompressionsalgorithmustyp (TCP) ist, der von den Mitteln zum Verarbeiten der Daten (CP, DP) ausgeführt wird, die eine Faxkommunikation betreffenden Datenkanälen (B) zugewiesen sind, und ein Telefaxbetriebsmodus (MF) ohne oder mit Trägererkennung.

5. Einrichtung nach einem der Ansprüche 1 bis 4, wobei die Mittel zum Einbringen (CME, TA, RE) außerdem in die Signalisierungsnachrichten einer Kommunikation eine entsprechende Transportprotokoll-Portnummer (NP) für die Signalisierungsnachrichten (D) einkapselnden und in dem Hochgeschwindigkeitsnetz (RHD) übertragenen Pakete einbringen.

6. Einrichtung nach einem der Ansprüche 1 bis 5, wobei wenigstens die Parameter (TC, MS, TCF, MF) in ein Benutzer-Benutzer-Informationsfeld (IUU) der Signalisierungsnachrichten (D) eingebracht werden.

7. Einrichtung nach einem der Ansprüche 1 bis 6, wobei das Mittel (CME, TA, RE) zum Einbringen nachdem es die ersten Parameter (TC1, MS1, TCF1, MF1) übertragen hat, die eingebracht wurden in eine Signalisierungsnachricht zum Aufbau einer Kommunikation mit einer entfernten Einrichtung (EI2), und als Antwort auf von den Mitteln (CMR, TA, RR) zum Herausziehen aus einer von der entfernten Einrichtung (EI2) übertragenen zweiten Signalisierungsnachricht herausgezogene zweite Parameter (LAG, MS2, TCF2, MF2) eine dritte Signalisierungsnachricht überträgt, die die zweiten Parameter (TC2, MS2, TCF2, MF2) enthält, um eine funktionelle Kompatibilität mit der entfernten Einrichtung zu signalisieren, oder wenigstens einen der ersten Parameter (MS1, TCF1, MF1) enthält, um eine funktionelle Inkompatibilität mit der entfernten Einrichtung zu signalisieren.

8. Einrichtung nach Anspruch 7, wobei einer der zweiten Parameter eine Parameterliste (LAG) ist.

9. Einrichtung nach einem der Ansprüche 1 bis 8, mit einem Mittel (EN) zum Einkapseln der rekonstruierten Signalisierungsnachrichten (VME) in Pakete (IP) und zum Weiterleiten dieser in dem Hochgeschwindigkeitsnetz (RHD) an die entfernten Einrichtungen (EI2), wobei jedes Paket eine Routingadresse (@EI2) der entfernten Einrichtung (EI2) enthält, die in einer Routingtabelle (TRE) in Verbindung mit einer Rufnummer der entfernten Einrichtung gelesen wird, und mit einem Mittel (TA, TRE) zum Zuweisen einer Referenznummer in Verbindung mit der Rufnummer der entfernten Einrichtung für die verfügbaren internen Sende- und Empfangsdatenkanäle (B, BIE, BIR) über die Verarbeitungsmittel (CP, DP) für jede Kommunikation.
